# EUROPÄISCHE PATENTSCHRIFT

(11) **EP 0 406 808 B1**
(45) Veröffentlichungstag und Bekanntmachung des Hinweises auf die Patenterteilung: **05.05.1993**
(21) Anmeldenummer: 90112696.1
(22) Anmeldetag: 03.07.1990
(51) Int. Cl.: B21D 43/02

(54) **Kurbelantrieb für eine Materialeinzugsvorrichtung an einer Bearbeitungsmaschine insbesondere einem Stanz- und Biegeautomaten Stichwort: Feststehende Korrekturkurve**
Crankdrive for a blankfeeder at a working machine, in particular an automatic punching or bending machine
Commande à bielle pour un alimentateur de flans, en particulier pour une machine à découper ou à cintrer automatique

(30) Priorität: 04.07.1989 DE 3921998
(43) Veröffentlichungstag der Anmeldung: 09.01.1991
(73) Patentinhaber: Otto Bihler Maschinenfabrik GmbH & Co. KG, 87642 Halblech (DE)
(72) Erfinder: Bihler, Otto, D-8959 Halblech/Füssen (DE); Brüller, Eduard, CH-4632 Trimbach (CH)
(74) Vertreter: Weickmann, Heinrich, Dipl.-Ing.

(56) Entgegenhaltungen:
- DE-A- 2 740 211
- DE-A- 2 928 646
- DE-B- 2 613 269

## Beschreibung

Die Erfindung betrifft einen Kurbelantrieb für eine Materialeinzugsvorrichtung an einer Bearbeitungsmaschine, insbesondere einem Stanz- und Biegeautomaten, umfassend einen in einer stationären Lageranordnung mit konstanter Drehzahl um eine Kurbelscheibenachse umlaufende Kurbelscheibe und einen vermittels einer Schlittenanordnung auf der Kurbelscheibe angebrachten in seiner Exzentrizität gegenüber der Kurbelscheibenachse verstellbaren Kurbelzapfen, wobei zur Verstellung der Exzentrizität des Kurbelzapfens einerseits eine durch Einwirkung von außen zu betätigende Exzentrizitätsgrundeinstellvorrichtung vorgesehen ist und andererseits eine drehwinkelabhängige, d.h. von der jeweiligen Ortswinkeleinstellung der Kurbelscheibe abhängige Exzentrizitätskorrekturvorrichtung vorgesehen ist.

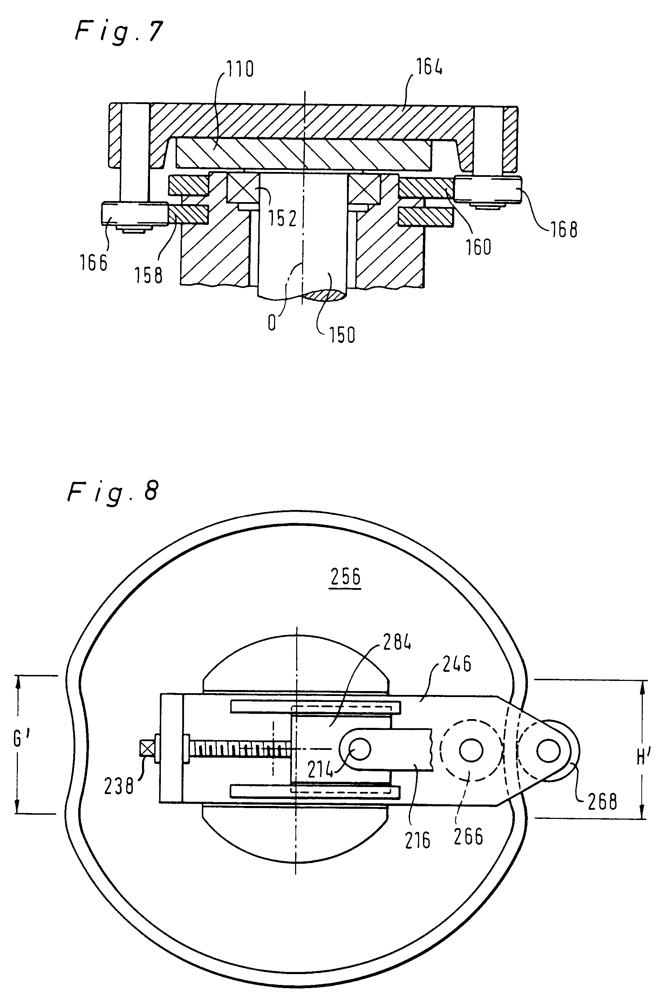

Ein solcher Kurbelantrieb ist aus der DE-A-27 06 351 bekannt. Es wird dort insbesondere auf die Ausführungsform nach Figur 7 verwiesen. Bei dieser Ausführungsform ist ein Hauptschlitten auf der Kurbelscheibe mittels eines Spindelantriebs verstellbar angebracht. Auf einem Nebenschlitten, der in Flucht mit dem Hauptschlitten geführt ist, ist der Kurbelzapfen angebracht. Zwischen dem Hauptschlitten und dem Nebenschlitten ist eine hydraulische Exzentrizitätskorrekturvorrichtung angebracht. Diese umfaßt einen doppelseitig beaufschlagten Kolben in einem auf dem Hauptschlitten fest angebrachten Zylinder. Zur Korrektur der Exzentrizität während des Umlaufs des Kurbelzapfens um die Kurbelscheibenachse ist es notwendig, den Kolben durch entsprechende hydraulische Zu- und Abführungen zu den auf seinen beiden Seiten gelegenen Zylinderkammern korrekturgerecht zu verschieben. Diese Zu- und Abführung muß periodisch im Takt des Kurbelscheibenumlaufs geschehen. Hierzu sind neben einer, mit hoher Genauigkeit arbeitenden, Zuteilervorrichtung für jede der beiden Zylinderkammern Drehverbindungen zwischen den Zylinderkammern und einer stationär angeordneten Versorgungseinrichtung erforderlich.

Mit Hilfe dieser bekannten Einrichtung ist es möglich, den Ort- Zeitverlauf der Linearbewegung des Kurbelzapfens in Richtung einer zur Kurbelscheibenachse radialen Wirkungslinie gegenüber einem Sinusverlauf dahingehend zu korrigieren, daß die Maxima entgegengesetzter Kuppen abgeflacht und die Flankenmittelbereiche in ihrem Neigungswinkel gegenüber der Zeitlinie versteilert sind. Dies ist erwünscht, um zum einen die Einzugszeit der Materialeinzugsvorrichtung zu verkürzen und zum anderen den Kompressionsweg eines in der Übertragungsstrecke zwischen Kurbelzapfen und Materialeinzugsvorrichtung gelegenen elastischen Glieds beim Auftreffen. der Materialeinzugsvorrichtung auf Endbegrenzungsanschläge zu verkürzen.

Aus der DE-A-28 50 944 ist auch eine mechanische Lösung für die Erzielung eines solchen modifzierten Ort- Zeitverlaufs der Linearbewegung des Kurbelzapfens in seiner Wirkungsrichtung bekannt. Dabei ist auf dem in seiner Grundexzentrizität gegenüber der Kurbelscheibenachse einstellbaren Kurbelzapfen ein Gleitstein drehbar gelagert. Dieser Gleitstein greift in eine Gleitführung eines von dem Kurbelzapfen zur Materialeinzugsvorrichtung führenden Pleuels ein. Auf der Kurbelscheibe ist ferner gegenüber dieser betriebsmäßig fest ein dreizackiges Gleichdick angeordnet. An dem Pleuel sind zwei Kurvenfolgerrollen angebracht, die mit der Umfangskurve des Gleichdicks in ständigem Eingriff stehen. Bei dieser Ausführungsform ist es im Falle einer Veränderung der Grundexzentrizität notwendig, das Gleichdick auf der Kurvenscheibe jeweils in seiner Winkellage um den Kurbelzapfen zu verstellen und wieder festzustellen und gleichzeitig die Verschieberichtung des von den Kurvenfolgerrollen gebildeten Kurvenfolgers auf verschiedene Richtungen gegenüber der Bewegungsrichtung des Einzugsschlittens einzustellen. Dies bedeutet einen erheblichen Einstellaufwand jedesmal dann, wenn die Grundexzentrizität verändert wird.

Der Erfindung liegt die Aufgabe zugrunde, ausgehend von den Eingangs definierten Kurbeltrieb, eine mechanische Getriebelösung für die Erzielung gewünschter Ort- Zeitkurven anzugeben. die in ihrem bei Veränderung der Grundexzentrizität notwendigen Einstellaufwand reduziert ist.

Zur Lösung dieser Aufgabe ist erfindungsgemäß vorgesehen, daß ein auf der Kurbelscheibe im wesentlichen radial zur Kurbelscheibenachse in einer Hauptschlittenführung geführter Hauptschlitten von einer gegenüber der Lageranordnung ortsfesten Kurvenbahnanordnung her vermittels einer Kurvenfolgeranordnung bewegbar ist und daß der Kurbelzapfen relativ zu dem Hauptschlitten durch die auf dem Hauptschlitten angeordnete Grundexzentrizitätseinstellvorrichtung verstellbar ist.

Es hat sich gezeigt, daß bei der erfindungsgemäßen Ausbildung des Kurbelantriebs eine Verstellung der Grundexzentrizität weitere Umstellmaßnahmen grundsätzlich nicht notwendig sind, jedenfalls solange nicht, als die Grundexzentrizität in einem bestimmten Grundexzentrizitätsbereich verbleibt. Wenn sehr große Grundexzentrizitätsveränderungen beabsichtigt sind, so mag es notwendig sein, für verschieden aneinander anschließende Grundexzentrizitätsbereiche, die Kurvenbahnanordnung auszuwechseln.

Um den Vorgang einer Grundexzentrizitätsveränderung einfach zu gestalten, wird vorgeschlagen, daß auf dem Hauptschlitten ein den Kurbelzapfen tragender Sekundärschlitten angeordnet und durch die Grundexzentrizitätseinstellvorrichtung einstellbar ist. Dabei kann die Grundexzentrizitätseinstellvorrichtung etwa von einem Spindeltrieb gebildet sein und der Sekundärschlitten kann auf dem Hauptschlitten in einer Sekundärschlittenführung gerührt sein, welche im wesentlichen parallel zur Hauptschlittenführung ist.

Die Kurvenbahnanordnung kann als eine ringförmig um die Drehachse geschlossene Kurvenbahnanordnung ausgebildet sein. Die Aufrechterhaltung des Eingriffs zwischen der Kurvenfolgeranordnung und der Kurvenbahnanordnung mag durch Federvorspannung auf die Kurvenfolgeranordnung gewährleistet sein. Wenn höchste Präzision gefordert wird, die durch einen Eingriffsverlust zwischen Kurvenfolgeranordnung und Kurvenbahn gestört werden könnte, bieten sich im wesentlichen vorspannungsunabhängige, formschlüssige Lösungen an. Eine solche Lösung besteht darin, daß die Kurvenbahnanordnung zwei im wesentlichen abstandskonstant verlaufende Kurvenbahnen umfaßt, von denen eine radial einwärts und eine weitere radial auswärts gerichtet ist und daß die Kurvenfolgeranordnung zwei einander benachbarte Kurvenfolgerrollen umfaßt, von denen jeweils eine mit der einen Kurvenbahn und die jeweils andere mit der anderen Kurvenbahn in Eingriff steht. Eine weitere Lösung besteht darin, daß die Kurvenbahnanordnung zwei in Richtung der Kurvenscheibenachse gegeneinander versetzte, gleichermaßen radial einwärts oder radial auswärts gerichtete Kurvenbahnen aufweist und daß die Kurvenfolgeranordnung jeweils eine Kurvenfolgerrolle in Eingriff mit jeder der Kurvenbahnen aufweist.

Die Kurve bzw. die Kurven der Kurvenbahnanordnung können in verschiedener Weise geformt sein, um die jeweils optimale Modifizierung des Sinusverlaufs zu erzielen. Beispielsweise kann die Kurvenbahnanordnung derart geformt sein, daß der Kurbelzapfen in einer im wesentlichen radial zur Kurbelscheibenachse verlaufenden Wirkungsrichtung - über einer Zeitlinie aufgetragen - eine von einer Sinuskurve abgeleitete Ortskurve durchläuft, welche im Bereich ihrer entgegengesetzt gerichteten Maxima ab geflacht ist.
Durch eine solche Formgebung wird lediglich der Verformungsweg des in den Übertragungsmitteln zwischen Kurbelzapfen und Materialeinzugsschlitten zwischengeschalteten elastischen Elements verkürzt , ohne daß eine wesentliche Einzugszeitverkürzung eintritt und damit auch keine wesentliche Verlängerung der Bearbeitungszeit für die Bearbeitungswerkzeuge der Bearbeitungsmaschinen erzielt wird.

Es ist aber auch möglich die Doppelkurvenanordnung derart zu formen, daß der Kurbelzapfen in einer im wesentlich radial zur Kurbelscheibenachse verlaufenden Wirkungsrichtungen - über einer Zeitlinie aufgetragen - eine von einer Sinuskurve abgeleiteten Ortskurve durchläuft, welche im Bereich ihrer Flankenmittelbereiche gegenüber einer Sinuskurve versteilert ist, d.h. mit der Zeitlinie einen gegen jeweils 90° hin vergrößerten Winkel einschließt. Bei einer solchen Ausbildung kann gegebenenfalls neben der Kompressionswegverringerung des elastischen Übertragungselements eine Verkürzung der Einzugszeit und dementsprechend eine Verlängerung der Bearbeitungszeit erzielt werden.

Die Anpaßbarkeit der Exzentrizitätskorrektur an unterschiedliche Grundexzentrizitätswerte innerhalb eines bestimmten Bereiches von Grundexzentrizität mit Hilfe einer einzigen Kurvenbahnanordnung kann noch weiter dadurch verbessert werden, daß zwischen dem Kurvenfolger und dem Hauptschlitten ein Übersetzungsgetriebe mit veränderbarem Übersetzungsverhältnis zwischengeschaltet wird. Eine solche Veränderung des Übersetzungsverhältnisses erfordert eine zusätzliche Einstellmaßnahme bei der Veränderung der Grundexzentrizität, jedoch ist diese Veränderungsmaßnahme vom Einstellaufwand her ungleich geringfügiger im Verhältnis zu den Umstellungsmaßnahmen, die bei der zum Stand der Technik gehörigen Lösung notwendig waren.

Nach einer bevorzugten Ausführungsform kann man sich die zusätzliche Umstellungsmaßnahme als einen besonderen Arbeitsvorgang einsparen, in dem man das Übersetzungsverhältnis des Übersetzungsgetriebes in zwangsläufiger Abhängigkeit von der Einstellung der Exzentrizitätsgrundeinstellung veränderbar macht.

Eine Möglichkeit der Beeinflußung des Übersetzungsverhältnisses besteht darin, daß auf der Kurbelscheibe ein Nockenfolgerträger in einer Trägerführung im wesentlichen radial zur Kurbelscheibenachse geführt ist, daß an dem Nockenfolgerträger eine gegenüber der Trägerführung winkelversetzte Schrägführung angeordnet ist und daß an dem Hauptschlitten eine in die Schrägführung eingreifende, gegenüber der Richtung der Hauptschlittenführung winkelversetzte Gegenschrägführung angebracht ist. Das Übersetzungsverhältnis hängt dabei von dem Maß der jeweiligen Winkelversetzung der Schrägführung bzw. der Gegenschrägführung ab.

Das Übersetzungsverhältnis kann bei einer solchen Ausführungsform leicht dadurch veränderbar gemacht werden, daß die Schrägführung des Nockenfolgerträgers in einem Einstellelement angebracht ist, welches gegenüber dem Nockenfolgerträger um eine zur Kurbelscheibenachse parallele Einstellachse drehbar gelagert ist und daß die Gegenschrägführung des Hauptschlittens in einem Gegeneinstellelement angebracht ist, welches an dem Hauptschlitten um eine zur Kurbelscheibenachse parallele Einstellachse einstellbar ist,und daß mindestens eines der beiden Elemente: Einstellelement, Gegeneinstellelement an dem jeweils zugehörigen Teil: Nockenfolgerträger, Hauptschlitten in verschiedenen Winkeleinstellungen um die jeweilige Einstellachse feststellbar ist. Aus Gründen der leichteren Durchführbarkeit von Übersetzungsveränderungsmaßnahmen empfiehlt es sich, daß das Gegeneinstellelement an dem Hauptschlitten in verschiedenen Winkeleintellungen um die jeweilige Einstellachse feststellbar ist.

Der Gedanke, die Exzentrizitätskorrektur des Kurbelzapfens in zwangsläufige Abhängigkeit von der Grundexzentrizitätseinstellung zu bringen, läßt sich bei der Ausführungsform mit dem eine Schrägführung aufweisenden Einstellelement und dem eine Gegenschrägführung aufweisenden Gegeneinstellelement in der Weise anwenden, daß das Gegeneinstellelement in zwangsläufiger Abhängigkeit von der Einstellung der auf dem Hauptschlitten angebrachten Exzentrizitätsgrundeinstellvorrichtung einstellbar ist. Beispielsweise läßt sich diese zwangsläufige Abhängigkeit bei Anordnung des Kurbelzapfens auf einem in einer Sekundärschlittenführung des Hauptschlittens geführten Sekundärschlitten dadurch verwirklichen, daß der Sekundärschlitten mit einer Zahnstange versehen ist und daß diese Zahnstange mit einem an dem Gegeneinstellelement angebrachten Zahnrad kämmt.

Das Zusammenwirken von Schrägführung und Gegenschrägführung kann beispielsweise dadurch gewährleistet werden, daß von der Schrägführung und der Gegenschrägführung jeweils eine als eine Führungsnut und die andere als eine in diese Führungsnut eingreifende Führungsrippe ausgebildet sind.

Die Antriebsübertragungsmittel von dem Kurbelzapfen auf einen Einzugsschlitten einer Materialeinzugsvorrichtung sind beliebig und durch die erfindungsgemäße Gestaltung des Kurbeltriebs nicht eingeschränkt. So ist es beipielsweise möglich, daß der Kurbelzapfen über einen Pleueltrieb mit einem Einzugsschlitten verbunden ist oder daß der Kurbelzapfen über einen Kurbelschleifentrieb mit einem Einzugsschlitten verbunden ist.

Der Begriff Kurbelscheibe soll jede Form von Rotationsteil mit Kurbelzapfen erfassen. So ist es möglich, daß die Kurbelscheibe von einem Teil einer Antriebswelle oder von einem auf die Antriebswelle aufgesetzten Flansch gebildet ist.

Um auch größeren Grundexzentrizitätsänderungen gerecht werden zu können, wird empfohlen, daß die Kurvenbahnanordnung auswechselbar an der Lageranordnung angebracht ist.

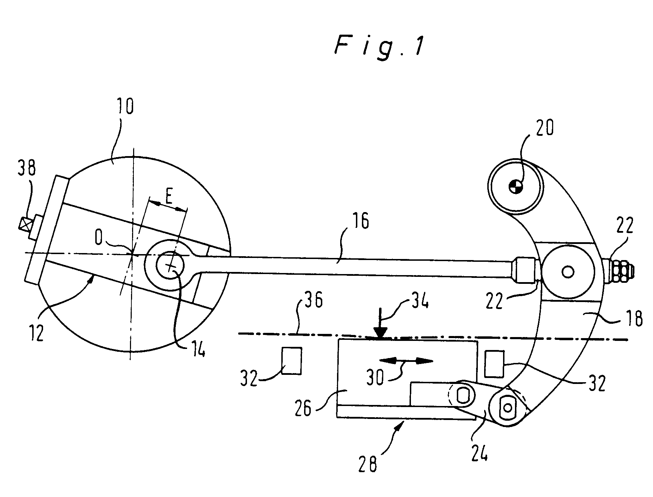

Ausgehend von einer der Figur 1 der DE-A 28 50 944 entsprechenden Vorrichtung zur Beeinflussung des von einem Kurbeltrieb mit drehzahlkonstant um eine Kurbelscheibenachse umlaufender Kurbelscheibe und einem in seiner Grundexzentrizität gegenüber der Kurbelscheibenachse einstellbaren Kurbelzapfen über eine Pleuelstange abgeleiteten, in einer Zeit-Weg-Kurve als angenähert sinusförmiger Wellenverlauf erscheinenden linearen Bewegungsverlaufs eines Materialeinzugsschlittens einer Bearbeitungsmaschine im Sinne einer Abflachung der Wellenkuppen und/oder einer Versteilerung der Wellenflanken mit Hilfe einer an die jeweilige Grundexzentrizität des Kurbelzapfens angepaßten Korrekturvorrichtung, welche auf der Abtastung einer ringförmig geschlossenen Korrekturkurvenbahnanordnung durch eine relativ zu dieser Korrekturkurvenbahnanordnung rotierende Kurvenfolgeranordnung und einer dadurch veranlaßten Erteilung einer im wesentlichen geradlinigen Folgebewegung an einen Nockenfolgerträger sowie der Überlagerung dieser Folgebewegung über den von dem Umlauf des Kurbelzapfens abgeleiteten Bewegungsverlauf der Pleuelstange beruht, kann eine Lösung der weiter oben definierten Aufgabe auch darin gesehen werden, daß die Kurvenfolgeranordnung auf die Pleuelstange über ein Übersetzungsgetriebe veränderlichen Übersetzungsverhältnisses einwirkt, welches zwischen dem Nockenfolgerträger und einem mit der Pleuelstange verbundenen Hauptschlitten dadurch gebildet ist, daß eine geradlinige Trägerführung des Nockenfolgerträgers und eine geradlinige Hauptschlittenführung des Hauptschlittens sich im wesentlichen senkrecht kreuzen und daß an dem Nockenfolgerträger und dem Hauptschlitten ein Schrägführungselement bzw. ein Gegenschrägführungselement angeordnet sind, welche miteinander in Schiebeeingriff stehen und gegenüber der Richtung Y der Trägerführung und der Richtung X der Hauptschlittenführung winkeleinstellbar sind.

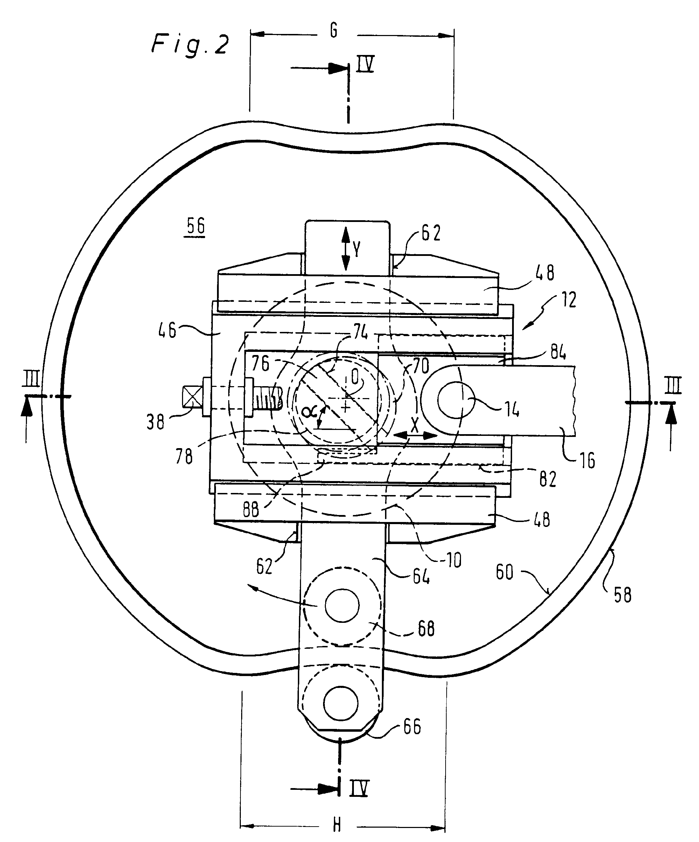

Die beiliegenden Figuren erläutern die Erfindung. Es stellen dar:
Figur 1
   Ein Schema einer Materialeinzugsvorrichtung mit Kurbeltrieb.
Figur 2
   Eine Draufsicht auf einen erfindungsgemäßen Kurbeltrieb.
Figur 3
   Einen Schnitt nach Linie III der Figur 2.
Figur 4
   Einen Schnitt nach Linie IV der Figur 2.
Figur 5
   Eine Explosionsdarstellung zur Ausführungsform nach den Figuren 2 bis 4.
Figur 6
   Den mit einem Kurbeltrieb nach Figur 2 bis 5 erreichbaren Ort- Zeitverlauf des Einzugsschlittens gemäß Figur 1.
Figur 7
   Eine Abwandlung der Kurvenbahnanordnung und der Kurvenfolgeranordnung.
Figur 8
   Eine vereinfachte Ausführungsform bei Verzicht auf das veränderbare Übersetzungsverhältnis.

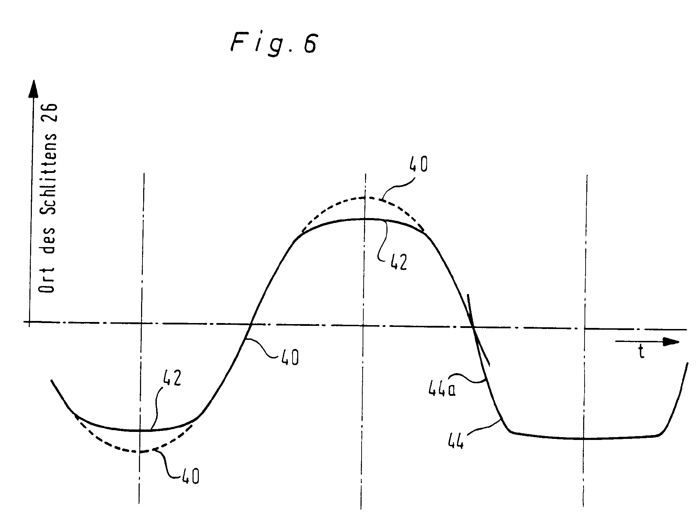

In Figur 1 erkennt man eine um eine Achse O rotierende Kurbelscheibe 10 mit einer Schlittenanordnung 12. Auf der Schlittenanordnung 12 ist ein Kurbelzapfen 14 angebracht, der eine Exzentrizität gegenüber der Kurbelscheibenachse O besitzt. Von dem Kurbelzapfen 14 führt eine Pleuelstange 16 zu einem Übertragungshebel 18, der um eine stationäre Schwenkachse 20 schwenkbar ist. Der Schwenkhebel 18 ist unter Vermittlung von kompressionseleastischen Übertragungselementen 22 mit der Pleuelstange 16 verbunden. An seinem freien Ende ist der Schwenkhebel 18 über eine Gelenkachse 24 mit einem Einzugsschlitten 26 einer Einzugsvorrichtung 28 verbunden.Der Einzugsschlitten 26 wird in Pfeilrichtung 30 durch den Schwenkhebel 18 hin und her bewegt, wenn die Kurbelscheibe 10 umläuft. Dabei stößt der Einzugsschlitten 26 jeweils nahe den Endpunkten seiner Oszillationsbewegung an Gegenanschläge 32 an, wobei dann die jeweilige Restbewegung des Schwenkhebels 18 durch die kompressionselastische Übertragungselemente 22 aufgefangen wird. Auf dem Einzugsschlitten 26 ist eine Materialklemmvorrichtung 34 angebracht, die im Maschinentakt gesteuert ist, so daß sie das einzuziehende Material 36 jeweils dann erfaßt, wenn der Einzugsschlitten 26 am linken Anschlag 32 angekommen ist und jeweils dann frei gibt, wenn der Einzugsschlitten 26 am rechten Anschlag 32 angekommen ist. Auf diese Weise wird das Material 36 schrittweise von links nach rechts vorgeschoben. Nicht dargestellt ist eine Materialhaltevorrichtung, die das Material jeweils dann festhält, wenn die Klemmvorrichtung 34 frei gegeben ist und dementsprechend im Gegentakt zu der Materialklemmvorrichtung 34 gesteuert ist. Die Schlittenanordnung 12 ist so aufgebaut, daß die Grundexzentrizität E durch einen Spindeltrieb 38 verändert werden kann und daß außerdem während eines einmaligen Umlaufs des Kurbelzapfens 14 um die Kurbelscheibenachse O eine Korrektur der Exzentrizität eintritt. Das Ergebnis der Exzentrizitätskorrektur ist in Figur 6 dargestellt. Wäre eine Exzentrizitätskorrektur nicht vorhanden, so würde die Bewegung des Einzugsschlittens 26 entsprechend dem Sinusverlauf 40 erfolgen. Dank der Exzentrizitätskorrektur ergeben sich abgeflachte Kuppen 42. Auf der rechten Seite der Figur 6 ist außerdem eine durch Exzentrizitätskorrektur erreichbare weitere Kurvenform 44 dargestellt, bei der die Flanken 44a im Bereich der Zeitachse t versteilert sind, d.h. die Einzugszeit verkürzt und damit die Materialbearbeitungszeit durch die nicht dargestellten Bearbeitungswerkzeuge verlängert ist.

Es wird nun auf die Figuren 2 bis 5 verwiesen, wo man wiederum die Kurbelscheibe 10 und die Schlittenanordnung 12 erkennt.

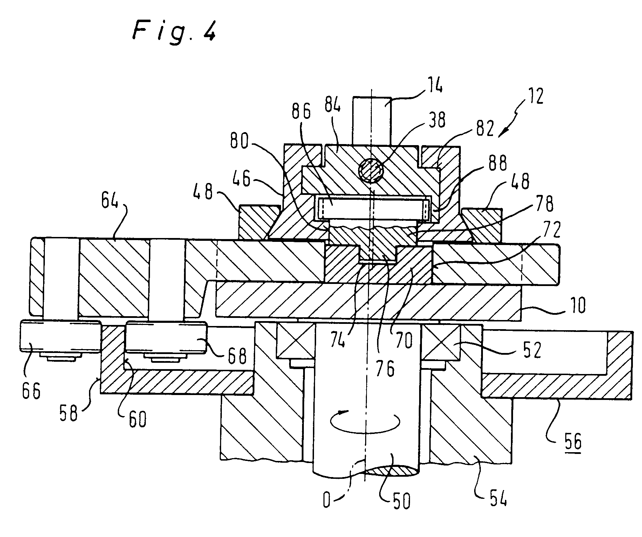

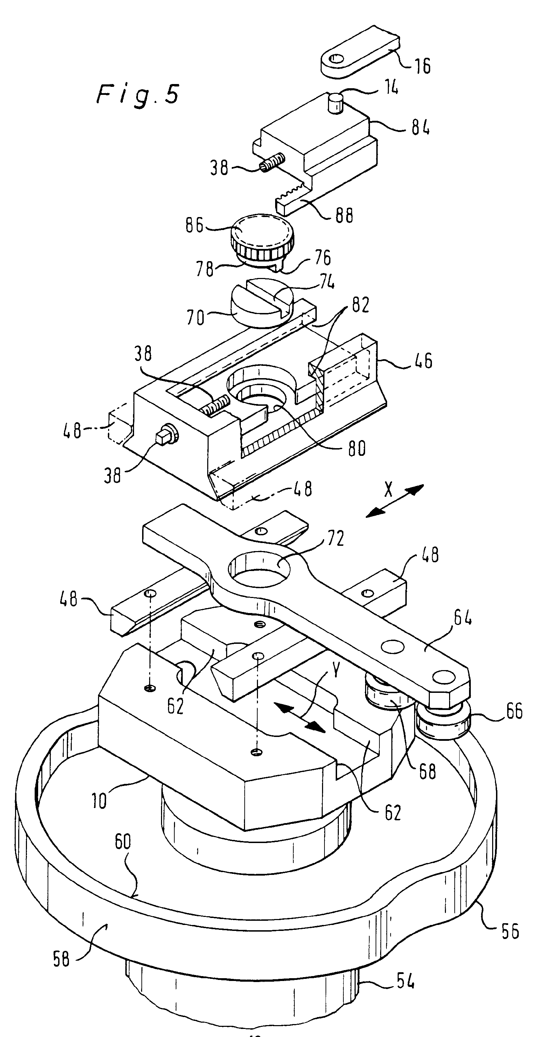

Die Schlittenanordnung 12 umfaßt einen Hauptschlitten 46, welcher, wie insbesondere aus Figuren 4 und 5 ersichtlich, in einer Hauptschlittenführung 48 auf der Kurbelscheibe 10 geführt ist. Die Kurbelscheibe 10 ist mit einer Antriebswelle 50 fest verbunden, die mittels eines Lagers 52 in einem Lagergehäuse 54 drehbar gelagert und mit konstanter Drehzahl angetrieben ist.

Die Bewegung des Hauptschlittens 46 längs der Hauptschlittenführung 48 ist von einer topfförmigen Kurvenscheibe 56 abgeleitet, die fest aber auswechselbar an dem Lagergehäuse 54 befestigt ist und sich um die Kurbelscheibenachse O vollständig herum erstreckt. Auf der topfförmigen Kurvenscheibe 56 sind zwei Kurvenbahnen 58 und 60 angebracht, wobei die Kurvenbahn 58 nach radial außen und die Kurvenbahn 60 nach radial innen weist. In einer Trägerführung 62 der Kurbelscheibe 10 ist ein Kurven folgerträger 64 im wesentlichen radial bezüglich der Kurbelscheibenachse O verschiebbar geführt. Der Kurvenfolgerträger 64 weist in Figur 4, linker Endbereich, zwei Nockenfolgerrollen 66, 68 auf, von denen die eine 66 in Eingriff mit der Kurvenbahn 58 und die andere 68 in Eingriff mit der Kurvenbahn 60 steht. Die Kurvenbahnen 58 und 60 haben, wie aus Figur 2 ersichtlich, einen von der Kreisform abweichenden Verlauf. Wenn die Kurbelscheibe 10 umläuft, so wird der Kurvenfolgerträger 64 zufolge des Eingriffs der Kurvenfolgerrollen 66, 68 in die Kurvenbahnen 58, 60 längs der Trägerführung 62 periodisch hin und her geschoben. Diese Hin- und Herbewegung des Kurvenscheibenträgers überträgt sich auf ein Einstellelement 70, welches in einer zylinderischen Ausnehmung 72 des Kurvenfolgerträgers 54 drehbar aufgenommen ist. Dieses Einstellelement 70 weist eine Schrägführungsnut 74 auf, die - wie insbesondere aus Figur 2 zu ersehen - um einen Winkel α von etwa 45° gegenüber der Führungsrichtung des Kurvenfolgerträgers 64 geneigt ist. Die Schrägführugnsnut 74 steht in Eingriff mit einer Schrägführungsrippe 76, welche an einem Gegeneinstellelement 78 angebracht ist. Das Gegeneinstellelement 78 ist in einer zylinderischen Ausnehmung 80 des Hauptschlittens 46 drehbar aufgenommen und in dem Hauptschlitten 46 unverdrehbar fest gestellt.

Wenn der Kurvenfolgerträger 64 eine Hin- und Herbewegung entlang seiner Führung 62 ausführt, so überträgt sich diese Hin- und Herbewegung über die Schrägführungsnut 74 und die Schrägführungsrippe 76 des Einstellelements 70 bzw. Gegeneinstellelements 78 auf den Hauptschlitten 46. Die durch die Führungsschienen 48 festgelegte Führungsrichtung X des Hauptschlitten 46 steht annähernd senkrecht zu der durch die Trägerführung 62 festgelegten Führungsrichtung Y des Nockenfolgerträgers 64. Bei einer 45°-Einstellung der Schrägführungsnut 74 und der Schrägführungsrippe 76 gegenüber den Führungsrichtungen X und Y ist das Übersetzungsverhältnis 1:1, d.h. die Bewegung des Nockenfolgerträgers 64 setzt sich in eine gleich große Bewegung des Hauptschlittens 46 um. Durch Veränderung der Neigung des Winkels α in Figur 2 kann das Übersetzungsverhältnis verändert werden.

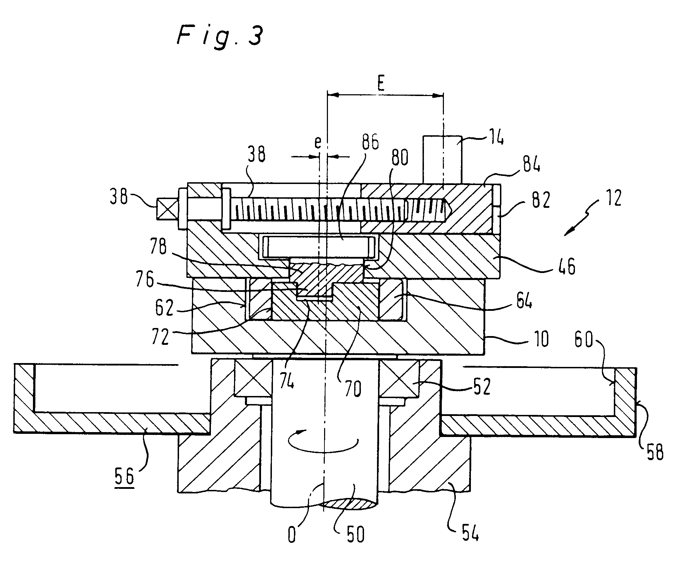

Auf dem Hauptschlitten 46 ist in einer Sekundärschlittenführung 82 ein Sekundärschlitten 84 geführt; die Führungsrichtung der Sekundärschlittenführung 82 ist parallel zur Führugnsrichtung X des Hauptschlittens 46. Der Sekundärschlitten 84 trägt den Kurbelzapfen 14 und ist gegenüber dem Hautpschlitten 46 durch den Spindeltrieb 38 verstellbar unter Einstellung der Grundexzentrzität E. Die Exzentrizitätskorrektur, die sich bei einem Umlauf des Kurbelzapfens 14 um die Kurbelscheibenachse O ergibt, ist in Figur 3 mit e bezeichnet. Der Wert e verändert sich während eines Umlaufs der Kurbelscheibe 10 entsprechend dem Verlauf der Kurvenbahnen 58 und 60. Damit kommt gemäß Figur 6 die Orts-Zeitkurve 40, 42 zustande, die den Ort des Kurbelzapfens 14 in Richtung des Pfeiles X zeitabhängig oder drehwinkelabhängig darstellt und annähernd dem Bewegungsablauf des Einzugsschlittens 26 entspricht.

Wie aus Figur 4 und 5 ersichtlich, ist mit dem Gegeneinstellelement 78 ein Zahnrad 86 drehfest verbunden, welches in Eingriff mit einer Zahnstange 88 am Sekundärschlitten 84 steht. Wird der Sekundärschlitten 84 durch den Spindeltrieb 38 in der Sekundärschlittenführung 82 verschoben, so verdreht sich notwendigerweise das Zahnrad 86 und damit verändert sich der Winkel α gemäß Figur 2, mit anderen Worten: das Übersetzungsverhältnis zwischen der Bewegung des Nokkenfolgerträgers 64 in der Führungsrichtung Y und der Bewegung des Hauptschlitten 46 in die Bewegungsrichtung X wird verändert.

Der Spindeltrieb 38 ist selbsthemmend, so daß bei einer Betätigung des Spindeltriebs 38 sowohl der Sekundärschlitten 84 auf dem Hauptschlitten 46 fest steht, als auch der Winkel α fest eingestellt ist.

Die momentane Exzentrizität des Kurbelzapfens 14 ergibt sich aus der Überlagerung der durch den Spindeltrieb 38 eingestellten Grundexzentrizität E und der durch den Verlauf der Kurvenbahnen 58, 60 bedingten Exzentrizitätskorrektur e.

Im Beispielsfall weisen die Kurven 58 und 60 in den Bereichen G und H jeweils eine Abflachung oder Einbuchtung auf, welche für die Abflachungen 42 in Figur 6 gegenüber den gestrichelt gezeichneten Sinuskuppen verantwortlich sind.

Durch Verdrehen des Spindeltriebs 38 können gleichzeitig die Grundexzentrizität E und der Winkel α und damit das Übersetzungsverhältnis zwischen dem Kurvenfolgerträger 64 und dem Hauptschlitten 46 verändert werden. Auf diese Weise kann die Exzentrizitätskorrektur e jeweils an die Grundexzentrizität E angepaßt werden, jedenfalls innerhalb eines bestimmten Grundexzentrizitätsbereiches. Wird dieser Grundexzentrizitätsbereich überschritten, so kann die topfförmige Kurvenscheibe 56 ausgetauscht werden durch eine Kurvenscheibe, die dem anschließenden Grundexzentrizitätsbereich E entspricht.

In Figur 7 ist eine Abwandlung der Ausführungsform nach den Figuren 2 bis 6 dargestellt. Analoge teile sind mit gleichem Bezugszeichen versehen wie in den Figuren 2 bis 6, jeweils vermehrt um die Zahl 100.

Die Ausführungsform nach Figur 7 unterscheidet sich von derjenigen nach den Figuren 2 bis 6 nur dadurch, daß an Stelle der topfförmigen Kurvenscheibe 56 zwei Kurvenscheiben 158 und 160 getreten sind. Die Kurvenfolgerrollen 166, 168 liegen sich diametral bezüglich der Kurbelscheibenachse O gegenüber; die eine von ihnen liegt an der Kurvenscheibe 158 an, die andere an der Kurvenscheibe 160.

In Figur 8 ist eine vereinfachte Ausführungsform dargestellt. Analoge teile sind wiederum mit gleichen Bezugszeichen versehen wie in der Ausführungsform nach den Figuren 2 bis 6, diesmal erhöht um die Zahl 200. In dieser Ausführungsform ist der Hauptschlitten 246 selbst Kurvenfolgerträger und trägt die Kurvenfolgerrollen 266, 268, die in Eingriff mit der topfförmigen Kurvenscheibe 256 stehen. Der Sekundärschlitten 284 ist durch den Spindeltrieb 238 gegenüber dem Hautpschlitten 246 verstellbar. Die Einbuchtungen G' und H' sind bei dieser Ausführugnsform um 90° gegenüber der Lage der Einbuchtungen G und H in der Ausführugnsform nach den Figuren 2 bis 6 versetzt. Das Ergebnis entspricht dem in Figur 6 dargestellten Ergebnis. Eine Möglichkeit der Veränderung des Übersetzungsverhältnisses besteht hier offensichtlich nicht. Damit ist diese Ausführungsform nur für engere Grundexzentrizitätsbereiche anwendbar. Die Möglichkeit des Austausches der Kurvenscheibe 256 besteht auch hier.

## Patentansprüche

1. Kurbelantrieb für eine Materialeinzugsvorrichtung (26, 34 an einer Bearbeitungsmaschine, insbesondere einem Stanz- und Biegeautomaten, umfassend einen in einer stationären Lageranordnung (52, 54) mit konstanter Drehzahl um eine Kurbelscheibenachse (O) umlaufende Kurbelscheibe (10) und einen vermittels einer Schlittenanordnung (46, 84) auf der Kurbelscheibe (10) angebrachten in seiner Exzentrizität (E, e) gegenüber der Kurbelscheibenachse (O) verstellbaren Kurbelzapfen (14), wobei zur Verstellung der Exzentrizität (E, e) des Kurbelzapfens (14) einerseits eine durch Einwirkung von außen zu betätigende Exzentrizitätsgrundeinstellvorrichtung (38) vorgesehen ist und andererseits eine drehwinkelabhängige, d.h. von der jeweiligen Ortswinkeleinstellung der Kurbelscheibe (10) abhängige Exzentrizitätskorrekturvorrichtung (56, 64, 74, 76), vorgesehen ist,
dadurch gekennzeichnet,
daß ein auf der Kurbelscheibe (10) im wesentlichen radial zur Kurbelscheibenachse (O) in einer Hauptschlittenführung (48) geführter Hauptschlitten (46) von einer gegenüber der Lageranordnung (54) ortsfesten Kuvenbahnanordnung (56) her vermittels einer Kurvenfolgeranord nung (64, 66, 68) bewegbar ist und daß der Kurbelzapfen (14) relativ zu dem Hauptschlitten (46) durch die auf dem Hauptschlitten (46) angeordnete Grundexzentrizitätseinstellvorrichtung (38) verstellbar ist.

2. Kurbelantrieb nach Anspruch 1,
dadurch gekennzeichnet,
daß auf dem Hauptschlitten (46) ein den Kurbelzapfen (14) tragender Sekundärschlitten (84) angeordnet und durch die Grundexzentrizitätseinstellvorrichtung (38) einstellbar ist.

3. Kurbelantrieb nach Anspruch 2,
dadurch gekennzeichnet,
daß die Grundexzentrizitätseinstellvorrichtung (38) von einem Spindeltrieb (38) gebildet ist.

4. Kurbelantrieb nach einem der Ansprüche 2 und 3,
dadurch gekennzeichnet,
daß der Sekundärschlitten (84) auf dem Hauptschlitten (46) in einer Sekundärschlittenführung (82) geführt ist, welche im wesentlichen parallel zu der Hauptschlittenführung (48) ist.

5. Kurbelantrieb nach einem der Ansprüche 1 bis 4,
dadurch gekennzeichnet,
daß die Kurvenbahnanordnung (56) eine ringförmig um die Kurbelscheibenachse (O) geschlossene Kurvenbahnanordnung ist.

6. Kurbelantrieb nach Anspruch 5,
dadurch gekennzeichnet,
daß die Kurvenbahnanordnung (56) zwei im wesentlichen abstandskonstant verlaufende Kurvenbahnen (58, 60) umfaßt, von denen eine (60) radial einwärts und eine weitere (58) radial auswärts gerichtet ist und daß die Kurvenfolgeranordnung (64, 66, 68) zwei einander benachbarte Kurvenfolgerrollen (66, 68) umfaßt, von denen jeweils eine (68) mit der einen Kurvenbahn (60) und die jeweils andere (66) mit der anderen Kurvenbahn (58) im Eingriff steht.

7. Kurbelantrieb nach Anspruch 5,
dadurch gekennzeichnet,
daß die Kurvenbahnanordnung zwei in Richtung der Kurbelscheibenachse (O) gegeneinander versetzte, gleichermaßen radial einwärts oder radial auswärts gerichtete Kurvenbahnen (158, 160) aufweist und daß die Kurvenfolgeranordnung (164, 166, 168) jeweils eine Kurvenfolgerrolle (166, 168) in Eingriff mit jeder der Kurvenbahnen (158, 160) aufweist.

8. Kurbelantrieb nach einem der Ansprüche 1 bis 7,
dadurch gekennzeichnet,
daß die Kurvenbahnanordnung (56) derart geformt ist, daß der Kurbelzapfen (14) in einer im wesentlichen radial zur Kurbelscheibenachse (O) verlaufenden Wirkungs - richtung (16) - über einer Zeitlinie (t) aufgetragen - eine von einer Sinuskurve (40) abgeleitete Ortskurve (40, 42) durchläuft, welche im Bereich ihrer entgegengesetzt gerichteten Maxima abgeflacht ist (bei 42).

9. Kurbelantrieb nach einem der Ansprüche 1 bis 8,
dadurch gekennzeichnet,
daß die Kurvenbahnanordnung (56) derart geformt ist, daß der Kurbelzapfen (14) in einer im wesentlich radial zur Kurbelscheibenachse (O) verlaufenden Wirkungsrichtung (16) - über einer Zeitlinie (t) aufgetragen - eine von einer Sinuskurve (40) abgeleitete Ortskurve (44) durchläuft, welche im Bereich ihrer Flankenmittelbereiche (44a) gegenüber einer Sinuskurve (40) versteilert ist, d.h. mit der Zeitlinie (t) einen gegen jeweils 90° hin vergrößerten Winkel einschließt.

10. Kurbelantrieb nach einem der Ansprüche 1 bis 9,
dadurch gekennzeichnet,
daß zwischen dem Kurvenfolger (64, 66, 68) und dem Hauptschlitten (46) ein Übersetzungsgetriebe (74, 76) zwischengeschaltet ist.

11. Kurbelantrieb nach Anspruch 10,
dadurch gekennzeichnet,
daß das Übersetzungsverhältnis (α) des Übersetzungsgetriebes (74, 76) veränderbar ist.

12. Kurbelantrieb nach Anspruch 11,
dadurch gekennzeichnet,
daß das Übersetzungsverhältnis (α) des Übersetzungsgetriebes (74, 76) in zwangsläufiger Abhängigkeit von der Einstellung der Exzentrizitätsgrundeinstellvorrichtung (38) veränderbar ist.

13. Kurbelantrieb nach einem der Ansprüche 10 bis 12,
dadurch gekennzeichnet,
daß auf der Kurbelscheibe (46) ein Nockenfolgerträger (64) in einer Trägerführung (62) im wesentlichen radial zur Kurbelscheibenachse (O) geführt ist, daß an dem Nokkenfolgerträger (64) eine gegenüber der Trägerführung (62) winkelversetzte Schrägführung (74) angeordnet ist und daß an dem Hauptschlitten (46) eine in die Schrägführung (74) eingreifende, gegenüber der Richtung der Hauptschlittenführung (48) winkelversetzte Gegenschrägführung (76) angebracht ist.

14. Kurbelantrieb nach Anspruch 13,
dadurch gekennzeichnet,
daß die Schrägführung (74) des Nockenfolgerträgers (64) in einem Einstellelement (70) angebracht ist, welches gegenüber dem Nockenfolgerträger (64) um eine zur Kurbelscheibenachse (O) parallele Einstellachse drehbar gelagert ist und daß die Gegenschrägführung (76) des Hauptschlittens (46) in einem Gegeneinstellelement (78) angebracht ist, welches an dem Hauptschlitten (46) um eine zur Kurbelscheibenachse (O) parallele Einstellachse einstellbar ist, und daß mindestens eines der beiden Elemente (70, 78): Einstellelement (70), Gegeneinstellelement (78) an dem jeweils zugehörigen Teil: Nokkenfolgerträger (64), Hauptschlitten (46) in verschiedenen Winkeleinstellungen (α) um die jeweilige Einstellachse feststellbar ist.

15. Kurbelantrieb nach Anspruch 14,
dadurch gekennzeichnet,
daß das Gegeneinstellelement (78) an dem Hauptschlitten (46) in verschiedenen Winkeleisntellungen (α) um die jeweilige Einstellachse feststellbar ist.

16. Kurbelantrieb nach Anspruch 15,
dadurch gekennzeichnet,
daß das Gegeneinstellelement (78) in zwangsläufiger Abhängigkeit von der Einstellung der auf dem Hauptschlitten (46) angebrachten Exzentrizitätsgrundeinstellvorrichtung (38) einstellbar ist.

17. Kurbelantrieb nach Anspruch 16,
dadurch gekennzeichnet,
daß bei Anordnung des Kurbelzapfens (14) auf einem in einer Sekundärschlittenführung (82) des Hauptschlittens (46) geführten Sekundärschlitten (84), dieser Sekundärschlitten (84) mit einer Zahnstange (88) versehen ist und daß diese Zahnstange (88) mit einem an dem Gegeneinstellelement angebrachten Zahnrad (86) kämmt.

18. Kurbelantrieb nach einem der Ansprüche 13 bis 17,
dadurch gekennzeichnet,
daß von der Schrägführung (74) und der Gegenschrägführung (76) jeweils eine als eine Führungsnut (74) und die andere als eine in diese Führungsnut (74) eingreifende Führungsrippe (76) ausgebildet sind.

19. Kurbelantrieb nach einem der Ansprüche 1 bis 18,
dadurch gekennzeichnet,
daß der Kurbelzapfen (14) über einen Pleueltrieb (16) mit einem Einzugsschlitten (26) verbunden ist.

20. Kurbelantrieb nach einem der Ansprüche 1 bis 18,
dadurch gekennzeichnet,
daß der Kurbelzapfen (14) über einen Kurbelschleifentrieb mit einem Einzugsschlitten (26) verbunden ist.

21. Kurbelantrieb nach einem der Ansprüche 1 bis 20,
dadurch gekennzeichnet,
daß die Kurbelscheibe (10) von einem Teil einer Antriebswelle (50) oder von einem auf die Antriebswelle (50) aufgesetzten Flansch gebildet ist.

22. Kurbelantrieb nach einem der Ansprüche 1 bis 21,
dadurch gekennzeichnet,
daß die Kurvenbahnanordnung (56) auswechselbar an der Lageranordnung (54) angebracht ist.

23. Vorrichtung zur Beeinflussung des von einem Kurbeltrieb mit drehzahlkonstant um eine Kurbelscheibenachse (O) umlaufender Kurbelscheibe und einem in seiner Grundexzentrizität (E) gegenüber der Kurbelscheibenachse (O) einstellbaren Kurbelzapfen (14) über eine Pleuelstange (16) abgeleiteten, in einer Zeit-Weg-Kurve als angenähert sinusförmiger Wellenverlauf (40) erscheinenden linearen Bewegungsverlaufs eines Materialeinzugsschlittens (26) einer Bearbeitungsmaschine im Sinne einer Abflachung der Wellenkuppen (42) und/oder einer Versteilerung der Wellenflanken (44a) mit Hilfe einer an die jeweilige Grundexzentrizität (E) des Kurbelzapfens (14) angepaßten Korrekturvorrichtung, welche auf der Abtastung einer ringförmig geschlossenen Korrekturkurvenbahnanordnung (58,60) durch eine relativ zu dieser Korrekturkurvenbahnanordnung rotierende Kurvenfolgeranordnung (66,68) und einer dadurch veranlaßten Erteilung einer im wesentlichen geradlinigen Folgebewegung an einen Nockenfolgerträger (64) sowie der Überlagerung dieser Folgebewegung über den von dem Umlauf des Kurbelzapfens (14) abgeleiteten Bewegungsverlauf der Pleuelstange (16) beruht,
**dadurch gekennzeichnet,**
daß die Kurvenfolgeranordnung (66,68) auf die Pleuelstange (16) über ein Übersetzungsgetriebe (74,76) veränderlichen Übersetzungsverhältnisses einwirkt, welches zwischen dem Nockenfolgerträger (64) und einem mit der Pleuelstange (16) verbundenen Hauptschlitten (46) dadurch gebildet ist, daß eine geradlinige Trägerführung (62) des Nockenfolgerträgers (64) und eine geradlinige Hauptschlittenführung (48) des Hauptschlittens (46) sich im wesentlichen senkrecht kreuzen und daß an dem Nockenfolgerträger (64) und dem Hauptschlitten (46) ein Schrägführungselement (70,74) bzw. ein Gegenschrägführungselement (78,76) angeordnet sind, welche miteinander in Schiebeeingriff stehen und gegenüber der Richtung Y der Trägerführung (62) und der Richtung X der Hauptschlittenführung (48) winkeleinstellbar sind.

## Claims

1. Crank drive for a material feeder (26, 34) on a machine tool, in particular an automatic punching and bending tool, comprising a crank disc (10), revolving at constant speed round a crank disc axis (O) in a stationary bearing arrangement (52, 54) and a crank pin (14) which is mounted by means of a slide arrangement (46, 84) on the crank disc (10) and of which the eccentricity (E, e) is adjustable relative to the crank disc axis ( O), wherein, for adjustment of the eccentricity (E, e) of the crank pin (14), on the one hand a basic eccentricity setting device (38) actuated by external action is provided and, on the other hand, an eccentricity correcting device (56, 64, 74, 76) which is dependent on the rotational angle, i.e. dependent on the respective local angular setting of the crank disc (10), is provided, characterised in that a main slide (46) guided on the crank disc (10) substantially radially to the crank disc axis (O) in a main slide guide (48) is movable from a cam profile arrangement (56) which is stationary relative to the bearing arrangement (54) by means of a cam follower arrangement (64, 66, 68) and in that the crank pin (14) is adjustable relative to the main slide (46) by the basic eccentricity setting device (38) arranged on the main slide (46).

2. Crank drive according to claim 1, characterised in that a secondary slide (84) carrying the crank pin (14) is arranged on the main slide (46) and can be set by the basic eccentricity setting device (38).

3. Crank drive according to claim 2, characterised in that the basic eccentricity setting device (38) is formed by a spindle mechanism (38).

4. Crank drive according to one of claims 2 and 3, characterised in that the secondary slide (84) is guided on the main slide (46) in a secondary slide guide (82) which is substantially parallel to the main slide guide (48).

5. Crank drive according to one of claims 1 to 4, characterised in that the cam profile arrangement (56) is a cam profile arrangement which is closed in the form of a ring profile the crank disc axis (O).

6. Crank drive according to claim 5, characterised in that the cam profile arrangement (56) comprises two cam profiles (58, 60) which extend with substantially constant spacing, of which one cam profile (60) is directed radially inwards and another (58) radially outwards and in that the cam follower arrangement (64, 66, 68) comprises two adjacent cam follower rollers (66, 68) of which one (68) in each case engages with one cam profile (60) and the other (66) in each case engages with the other cam profile (58).

7. Crank drive according to claim 5, characterised in that the cam profile arrangement has two cam profiles (158, 160) which are mutually offset in the direction of the crank disc axis (O) and are similarly directed radially inwards or radially outwards and in that the cam follower arrangement (164, 166, 168) has in each case a cam follower roller (166, 168) engaging with each of the cam profiles (158, 160).

8. Crank drive according to one of claims 1 to 7, characterised in that the cam profile arrangement (56) is shaped such that the crank pin (14) passes through a position curve (40, 42) which is derived from a sine curve (40) and is flattened in the region of its opposingly directed peaks (at 42) in a line of action (16) - plotted over a time line (t) - extending substantially radially to the crank disc axis (O).

9. Crank drive according to one of claims 1 to 8, characterised in that the cam profile arrangement (56) is shaped such that the crank pin (14) passes through a position curve (44) which is derived from a sine curve (40) and is made steeper than a sine curve (40) in the region of the central regions of its slopes (44a), i.e. encloses with the time line (t) an angle increased toward 90° in each case, in a line of action (16) - plotted over a time line (t) - extending substantially radially to the crank disc axis (O).

10. Crank drive according to one of claims 1 to 9, characterised in that a transmission gear (74, 76) is interposed between the cam follower (64, 66, 68) and the main slide (46).

11. Crank drive according to claim 10, characterised in that the transmission ratio (α) of the transmission gear (74, 76) is variable.

12. Crank drive according to claim 11, characterised in that the transmission ratio (α) of the transmission gear (74, 76) is variable as an inevitable function of the setting of the basic eccentricity setting device (38).

13. Crank drive according to one of claims 10 to 12, characterised in that a cam follower carrier (64) is guided substantially radially to the crank disc axis (O) in a carrier guide (62) on the crank disc (46), in that an oblique guide (74) offset at an angle from the carrier guide (62) is arranged on the cam follower carrier (64) and in that an opposing oblique guide (76) which engages in the oblique guide (74) and is offset at an angle to the direction of the main slide guide (48) is mounted on the main slide (46).

14. Crank drive according to claim 13, characterised in that the oblique guide (74) of the cam follower carrier (64) is mounted in a setting element (70) which is rotatably mounted relative to the cam follower carrier (64) about a setting axis parallel to the crank disc axis (O) and in that the opposing oblique guide (76) of the main slide (46) is mounted in an opposing setting element (78) which can be set on the main slide (46) about a setting axis parallel to the crank disc axis (O), and in that at least one of the two elements (70, 78): setting element (70), opposing setting element (78) can be fixed on the respective associated part: cam follower carrier (64), main slide (46) at different angular settings (α) about the respective setting axis.

15. Crank drive according to claim 14, characterised in that the opposing setting element (78) can be fixed on the main slide (46) at various angular settings (α) about the respective setting axis.

16. Crank drive according to claim 15, characterised in that the opposing setting element (78) can be set as an inevitable function of the setting of the basic eccentricity setting device (38) mounted on the main slide (46).

17. Crank drive according to claim 16, characterised in that, when the crank pin (14) is arranged on a secondary slide (84) guided in a secondary slide guide (82) of the main slide (46), this secondary slide (84) is provided with a rack (88) and in that this rack (88) meshes with a gear-wheel (86) mounted on the opposing setting element.

18. Crank drive according to one of claims 13 to 17, characterised in that of the oblique guide (74) and the opposing oblique guide (76), one in each case is constructed as a guide groove (74) and the other as a guide rib (76) engaging in this guide groove (74).

19. Crank drive according to one of claims 1 to 18, characterised in that the crank pin (14) is connected to a feeder slide (26) via a connecting rod mechanism (16).

20. Crank drive according to one of claims 1 to 18, characterised in that the crank pin (14) is connected via a crank slot mechanism to a feeder slide (26).

21. Crank drive according to one of claims 1 to 20, characterised in that the crank disc (10) is formed by part of a drive shaft (50) or by a flange placed on the drive shaft (50).

22. Crank drive according to one of claims 1 to 21, characterised in that the cam profile arrangement (56) is mounted detachably on the bearing arrangement (54).

23. Device for influencing the linear course of movement of a material feeding slide (26) of a machine tool, the course of movement appearing as a substantially sinusoidal wave course (4) in a time/position curve and being derived from a crank mechanism with a crank disc revolving at constant speed round a crank disc axis (O) and a crank pin (74) which is adjustable relative to the crank disc axis (O) in its basic eccentricity (E) in the sense of a flattening of the wave curves (42) and/or a steepening of the wave flanks (44a) by means of a correcting device which is adapted to the respective basic eccentricity (E) of the crank pin (14) and is based on the scanning of an annularly closed correcting cam profile arrangement (58, 60) by a cam follower arrangement (66, 68) rotating relative to this correcting cam profile arrangement and the resultant imparting of a substantially rectilinear following movement on to a cam follower carrier (64) and the superimposition of this following movement on the course of movement of the connecting rod (16) derived from the rotation of the crank pin (14), characterised in that the cam follower arrangement (66, 68) acts upon the connecting rod (16) via a transmission mechanism (74, 76) which is formed between the cam follower carrier (64) and a main slide (46) connected to the connecting rod (16) in that a rectilinear carrier guide (62) of the cam follower carrier (64) and a rectilinear main slide guide (48) of the main slide (46) intersect substantially perpendicularly and that an oblique guide element (70, 74) and an opposing oblique guide element (78, 76) are arranged on the cam follower carrier (64) and the main slide and engage in one another in a sliding manner and are angularly adjustable relative to direction Y of the carrier guide (62) and direction X of the main slide guide (48).

## Revendications

1. Entraînement à manivelle pour un dispositif d'introduction de matière (26, 34) sur une machine-outil, en particulier un robot d'estampage et de pliage, comprenant un flasque de manivelle (10) tournant dans un palier stationnaire (52, 54), à une vitesse de rotation constante, autour d'un axe de flasque de manivelle (O) et un tourillon de manivelle (14) monté au moyen d'un dispositif à chariot (46, 84) sur le flasque de manivelle (10) et déplaçable en excentricité (E, e) par rapport à l'axe de flasque de manivelle (O), dans lequel est prévu, pour effectuer le réglage de l'excentricité (E, e) du tourillon de manivelle (14), d'une part, un dispositif de réglage de base d'excentricité (38) actionné en agissant de l'extérieur et, d'autre part, un dispositif de correction d'excentricité (56, 64, 74, 76), agissant en fonction de l'angle de rotation, c'est-à-dire du réglage angulaire local du flasque de manivelle (10), caractérisé en ce qu'un coulisseau principal (46), guidé sur le flasque de manivelle (10) dans une direction sensiblement radiale par rapport à l'axe de flasque de manivelle (O), dans un guidage principal de coulisseau (48), est déplaçable par un agencement à piste de came (56), localement fixe par rapport à l'agencement de palier (54), au moyen d'un dispositif suiveur de came (64, 66, 68), et en ce que le tourillon de manivelle (14) est réglable par rapport au coulisseau principal (46) au moyen d'un dispositif de réglage d'excentricité de base (38) disposé sur le coulisseau principal (46).

2. Entraînement à manivelle selon la revendication 1, caractérisé en ce qu'un coulisseau secondaire (84), portant le tourillon de manivelle (14), est disposé sur le coulisseau principal (46) et réglable au moyen du dispositif de réglage d'excentricité de base (38).

3. Entraînement à manivelle selon la revendication 2, caractérisé en ce que le dispositif de réglage d'excentricité de base (38) est formé par une transmission à tige filetée (38).

4. Entraînement à manivelle selon l'une des revendications 2 et 3, caractérisé en ce que le coulisseau secondaire (84) est guidé sur le coulisseau principal (46) dans un guidage de coulisseau secondaire (82) s'étendant sensiblement parallèlement au guidage de coulisseau principal (48).

5. Entraînement à manivelle selon l'une des revendications 1 à 4, caractérisé en ce que le dispositif à pistes de came (56) est un dispositif à pistes de came fermé en anneau autour de l'axe de flasque de manivelle (O).

6. Entraînement à manivelle selon la revendication 5, caractérisé en ce que le dispositif à pistes de came (56) comprend deux pistes de came (58, 60) s'étendant sensiblement suivant un espacement constant, dont l'une (60) est orientée radialement vers l'intérieur et l'autre (58) radialement vers l'extérieur, et en ce que le dispositif suiveur de came (64, 66, 68) comprend deux galets suiveurs de came (66, 68) voisins l'un de l'autre, dont l'un (68) est en contact avec la première piste de came (60) et l'autre (66) avec la deuxième piste de came (58).

7. Entraînement à manivelle selon la revendication 5, caractérisé en ce que le dispositif à pistes de came présente deux pistes de came (158, 160) décalées l'une par rapport à l'autre en direction de l'axe de flasque de manivelle (O), orientées d'une même valeur radialement vers l'intérieur ou radialement vers l'extérieur, et en ce que le dispositif suiveur de came (164, 166, 168) présente respectivement un galet suiveur de came (166, 168) en contact avec chacune des pistes de came (158, 160).

8. Entraînement à manivelle selon l'une des revendications 1 à 7, caractérisé en ce que le dispositif à pistes de came (56) est formé de telle façon que le tourillon de manivelle (14) se déplace sur une courbe de positionnement (40, 42) dérivée d'une sinusoïde (40) - suivant une représentation en fonction du temps (t) - dans une direction d'action (16) s'étendant sensiblement radialement par rapport à l'axe de flasque de manivelle (O), la courbe de positionnement étant aplatie (en 42) dans la zone de ses maxima orientés dans des sens opposés.

9. Entraînement à manivelle selon l'une des revendications 1 à 8, caractérisé en ce que le dispositif à pistes de came (56) est formé de telle façon que le tourillon de manivelle (14) se déplace sur une courbe de positionnement (44) dérivée d'une sinusoïde (40) - suivant une représentation en fonction du temps (t) - dans une direction d'action (16) s'étendant sensiblement radialement par rapport à l'axe de flasque de manivelle (O), cette courbe de positionnement (44) étant rendue plus raide par rapport à une sinusoïde (40), dans la zone de ses milieux de flanc (44a), c'est-à-dire que la ligne d'axe temporelle (t) fait chaque fois un angle agrandi, vers la valeur de 90°.

10. Entraînement à manivelle selon l'une des revendications 1 à 9, caractérisé en ce qu'une transmission de démultiplication (74, 76) est interposée entre le suiveur de came (64, 66, 68) et le coulisseau principal (46).

11. Entraînement à manivelle selon la revendication 10, caractérisé en ce que le rapport de démultiplication (α) de la transmission de démultiplication (74, 76) est modifiable.

12. Entraînement à manivelle selon la revendication 11, caractérisé en ce que le rapport de démultiplication (α) de la transmission de démultiplication (74, 76) est modifiable suivant une relation dépendant obligatoirement du réglage du dispositif de réglage de base d'excentricité (38).

13. Entraînement à manivelle selon l'une des revendications 10 à 12, caractérisé en ce que sur le flasque de manivelle (46) est monté un support de suiveur de came (66), dans un guidage de support (62) orienté sensiblement radialement par rapport à l'axe de flasque de manivelle (O), en ce qui est prévu sur le support de suiveur de came (64) un guidage oblique (74) orienté avec un décalage angulaire par rapport au guidage de support (62), et en ce que sur le coulisseau principal (46) est monté un guidage oblique conjugué (76), agissant sur le guidage oblique (74) et orienté de façon décalée angulairement par rapport à la direction du guidage de coulisseau principal (48).

14. Entraînement à manivelle selon la revendication 13, caractérisé en ce que le guidage oblique (74) du support de suiveur de came (64) est monté dans un élément de réglage (70) monté rotatif par rapport au support de suiveur de came (64) autour d'un axe de réglage parallèle à l'axe de flasque de manivelle (O) et en ce que le guidage oblique conjugué (76) du coulisseau principal (46) est monté dans un élément de réglage conjugué (78) réglable sur le coulisseau principal (46) autour d'un axe de réglage parallèle à l'axe de flasque de manivelle (O) et en ce qu'au moins l'un des deux éléments (70, 78) : élément de réglage (70), élément de réglage conjugué (78) est susceptible d'être fixé sur la partie chaque fois associée : support de suiveur de came (64), coulisseau principal (46), en différentes positions de réglage angulaire (α) autour d'un axe de réglage respectif.

15. Entraînement à manivelle selon la revendication 14, caractérisé en ce que l'élément de réglage conjugué (78) est susceptible d'être fixé sur le coulisseau principal (48), en des réglages angulaires (α) différents, autour de l'axe de réglage respectif.

16. Entraînement à manivelle selon la revendication 15, caractérisé en ce que l'élément de réglage conjugué (78) est réglable selon une relation obligatoire, en fonction du réglage du dispositif de réglage de base d'excentricité (38) monté sur le coulisseau principal (46).

17. Entraînement à manivelle selon la revendication 16, caractérisé en ce que dans le cas d'une disposition du tourillon de manivelle (14) sur un coulisseau secondaire (84) guidé dans un guidage de coulisseau secondaire (82) du coulisseau principal (46), ce coulisseau secondaire (84) est pourvu d'une crémaillère (88) et en ce que cette crémaillère (88) engrène avec une roue dentée (86) montée sur l'élément de réglage conjugué.

18. Entraînement à manivelle selon l'une des revendications 13 à 17, caractérisé en ce que, pour l'ensemble formé pour le guidage oblique (74) et le guidage oblique conjugué (76), l'un est réalisé sous forme de rainure de guidage (74) et l'autre sous forme d'une nervure de guidage (76) s'engageant dans cette rainure de guidage (74).

19. Entraînement à manivelle selon l'une des revendications 1 à 18, caractérisé en ce que le tourillon de manivelle (14) est relié à un coulisseau d'introduction (26) par l'intermédiaire d'une transmission à bielle (16).

20. Entraînement à manivelle selon l'une des revendications 1 à 18, caractérisé en ce que le tourillon de manivelle (14) est relié à un coulisseau d'introduction (26) par l'intermédiaire d'une transmission à mécanisme de coulisse à manivelle.

21. Entraînement à manivelle selon l'une des revendications 1 à 20, caractérisé en ce que le flasque de manivelle (10) est formé par une partie d'un arbre d'entraînement (50) ou par une bride montée sur l'arbre d'entraînement (50).

22. Entraînement à manivelle selon l'une des revendications 1 à 21, caractérisé en ce que l'agencement à piste de came (56) est monté de façon amovible sur l'agencement de palier (54).

23. Dispositif pour effectuer une correction de l'allure du déplacement linéaire, produit par une transmission à bielle avec un flasque de manivelle tournant à une vitesse de rotation constante autour d'un axe de flasque de manivelle (O) et un tourillon de manivelle (14) dont l'excentricité de base (E) est réglable par rapport à l'axe de flasque de manivelle (10), selon une courbe déplacement-temps d'allure périodique (40) sensiblement sinusoïdale, obtenue par l'intermédiaire d'une tringlerie à bielle (16), pour un coulisseau d'introduction de matière (26) sur une machine-outil, dans le sens d'un aplatissement des sommets d'ondes (42) et/ou d'un raidissement des flancs d'ondes (44a) à l'aide d'un dispositif de correction, adapté à l'excentricité de base (E) spécifique du tourillon de manivelle (14), le dispositif de correction étant basé sur le palpage d'un dispositif à pistes de came de correction (58, 60) fermé en anneau, au moyen d'un dispositif suiveur de cames (66, 68) tournant par rapport à ce dispositif à pistes de came de correction, et d'une génération de ce fait d'un déplacement suiveur sensiblement rectiligne sur un support de suiveur de came (64) ainsi que par la superposition de ce déplacement suiveur à l'allure du déplacement de la bielle dérivée de la rotation du tourillon de bielle (14), caractérisé en ce que le dispositif suiveur de came (66, 68) provoque sur la bielle (16), par l'intermédiaire d'une transmission de démultiplication (74, 76), des variations de conditions de démultiplication, qui sont produites, entre le support de suiveur de came (64) et un coulisseau principal (46) relié à la bielle (16), par le fait qu'un guidage de support (62) rectiligne du support de suiveur de came (64) et un guidage de coulisseau principal (48) rectiligne du coulisseau principal (46) sont disposés en se croisant sensiblement perpendiculairement et en ce que, sur le support de suiveur de came (64) et le coulisseau principal (46), sont disposés respectivement un élément de guidage oblique (70, 74) et un élément de guidage oblique conjugué (78, 76), coopérant par un contact de coulissement et susceptibles d'être réglés angulairement par rapport à la direction Y du guidage de support (62) et à la direction X du guidage de coulisseau principal (48).
